(19) Europäisches Patentamt
European Patent Office
Office européen des brevets

(11) **EP 4 671 050 A1**

(12) **EUROPEAN PATENT APPLICATION**
published in accordance with Art. 153(4) EPC

(43) Date of publication:
**31.12.2025 Bulletin 2026/01**

(21) Application number: **24759669.5**

(22) Date of filing: **20.02.2024**

(51) International Patent Classification (IPC):
**B60R 16/023** (2006.01)   **B60W 40/02** (2006.01)
**B60W 40/12** (2012.01)   **B60W 40/10** (2012.01)

(52) Cooperative Patent Classification (CPC):
**B60R 1/22; B60R 16/023; B60W 40/02;
B60W 40/10; B60W 40/12; H04W 4/46**

(86) International application number:
**PCT/CN2024/077729**

(87) International publication number:
**WO 2024/174992 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.02.2023   CN 202310210029**

(71) Applicant: **Shenzhen Yinwang Intelligent
Technologies Co., Ltd.
Shenzhen, Guangdong 518110 (CN)**

(72) Inventors:
• **CHENG, Linsheng
  Shenzhen, Guangdong 518129 (CN)**
• **WEN, Tao
  Shenzhen, Guangdong 518129 (CN)**
• **WANG, Daiyin
  Shenzhen, Guangdong 518129 (CN)**
• **CHEN, Huai
  Shenzhen, Guangdong 518129 (CN)**

(74) Representative: **Gill Jennings & Every LLP
The Broadgate Tower
20 Primrose Street
London EC2A 2ES (GB)**

(54) **VEHICLE SENSING METHOD AND APPARATUS**

(57)   A vehicle sensing method is provided. The method is applied to a first vehicle (100) and includes: obtaining object data, where the object data includes first V2X data from at least one object terminal, the first V2X data includes first sensing data of the at least one object terminal, and the at least one object terminal is associated with the first vehicle; and obtaining a first sensing result based on the object data and second sensing data of the first vehicle, where the first sensing result is used to assist in controlling traveling of the first vehicle. In addition, a vehicle sensing apparatus, a communication apparatus, an electronic device, a computer-readable storage medium, and a computer program product are provided. The method and apparatus help expand a sensing range of a single vehicle and improve stability and reliability of a sensing result of the vehicle.

FIG. 2

**Description**

CROSS-REFERENCE TO RELATED APPLICATIONS

This application claims priority to Chinese Patent Application No. 202310210029.1, filed with the China National Intellectual Property Administration on February 25, 2023 and entitled "VEHICLE SENSING METHOD AND APPARATUS", which is incorporated herein by reference in its entirety.

TECHNICAL FIELD

This application relates to the field of vehicle technologies, and in particular, to a vehicle sensing method and apparatus.

BACKGROUND

With rapid development of intelligent network technologies, a plurality of levels of intelligent driving assistance technologies emerge, and include but not limited to L0 (emergency assistance), L1 (partial driving assistance), L2 (combined driving assistance), and L3 (conditionally autonomous driving), L4 (highly autonomous driving), L5 (fully autonomous driving), and the like. Currently, most autonomous driving vehicles at L4 detect, through singlevehicle intelligent sensing by using sensing devices such as a camera, a millimeter-wave radar, a lidar, and a global positioning system (global positioning system, GPS) on the vehicle, a dynamic object around the vehicle and avoid the dynamic object in a timely manner, to assist in implementing autonomous driving. However, the sensing device on the vehicle has a series of problems such as a sensing range limited by a distance, difficulty in handling a blocking situation, and limited sensing in an extreme environment. Consequently, sensing precision and detection effect are poor, and stability and reliability of a sensing result obtained by a single vehicle cannot be ensured.

With development and maturity of a 5th generation mobile communication technology (5th generation mobile communication technology, 5G), a vehicle-to-everything (vehicle-to-everything, V2X) technology emerges. How to use the V2X technology to compensate for stability and reliability of a single vehicle sensing solution is still an important problem that needs to be resolved urgently.

SUMMARY

Embodiments of this application provide a vehicle sensing method and apparatus, to help expand a sensing range of a single vehicle and improve stability and reliability of a sensing result of the single vehicle.

According to a first aspect, an embodiment of this application provides a vehicle sensing method. The method may be implemented by a vehicle sensing apparatus. The sensing apparatus may be an independent device, or may be a chip or a component in a device, or may be software, and the sensing apparatus may be deployed on a vehicle, a cloud, a roadside device, a remote server, a local server, or the like. A product form and a deployment manner of the sensing apparatus are not limited in this application.

In an optional implementation, the sensing apparatus may be deployed on a first vehicle (for example, referred to as an ego vehicle). The method may include: obtaining object data, where the object data includes first V2X data from at least one object terminal, the first V2X data includes first sensing data of the at least one object terminal, and the at least one object terminal is associated with the first vehicle; and obtaining a first sensing result based on the object data and second sensing data of the first vehicle, where the first sensing result is used to assist in controlling traveling of the first vehicle.

According to the foregoing method, the sensing apparatus may collect sensing data from the at least one object terminal, and use the sensing data from the at least one object terminal as a supplement to the second sensing data of the first vehicle, to assist in controlling traveling of the first vehicle. This expands a sensing range of a single vehicle and improves stability and reliability of a sensing result of the single vehicle. It should be understood that, during specific application, the at least one object terminal may include the first vehicle, or may include a vehicle (for example, referred to as another vehicle) other than the first vehicle, or another terminal device having a sensing capability and a V2X communication capability. A product form of the object terminal is not limited in embodiments of this application. In addition, the first vehicle is merely an example of a vehicle rather than any limitation. During actual application, a vehicle of any type or a vehicle in any environment may be used as the first vehicle to implement the sensing method in this embodiment of this application. This is not limited in embodiments of this application.

With reference to the first aspect, in a possible design, the method may further include: determining third sensing data from the first sensing data of the at least one object terminal, where a first delay associated with the third sensing data is less than or equal to a first threshold, the first delay includes a difference between generation time of the third sensing data and time at which the first vehicle obtains the third sensing data, and the first threshold includes a safety braking time threshold associated with an environment in which the first vehicle is located; and obtaining the first sensing result based on the object data and the second sensing data of the first vehicle includes: obtaining the first sensing result based on the third sensing data and the second sensing data.

According to the foregoing method, when the sensing apparatus is deployed on the first vehicle, the sensing apparatus may determine, based on first delays associated with obtained sensing data from different sources, whether the sensing data can be used to assist in controlling traveling of the first vehicle, to ensure stability and reliability of the used sensing data. For example, when the third sensing data included in the first sensing data from the at least one object terminal does not exceed the first threshold (for example, a safety delay threshold), the third sensing data may be used to obtain the corresponding first sensing result. Because sensing data other than the third sensing data in the first sensing data exceeds the first threshold, the sensing data is ineffective. In this case, the data is abandoned (for example, discarded). This reduces a possibility of obtaining an incorrect sensing result based on sensing data that exceeds a delay.

With reference to the first aspect, in a possible design, obtaining the first sensing result based on the third sensing data and the second sensing data includes: determining fourth sensing data from the third sensing data, where a first delay associated with the fourth sensing data is greater than or equal to a second threshold, and the second threshold is less than the first threshold; and fusing the fourth sensing data and the second sensing data by using an object detection technology, to obtain the first sensing result.

According to the foregoing method, when the sensing apparatus is deployed on the first vehicle, to fully consider, as much as possible, impact of application scenarios or environments in which different object terminals are located on communication, different delay levels may be obtained through classification. Different processing manners are used based on delay levels to which first delays associated with obtained sensing data from different sources belong, so that different sensing data is corrected. This ensures stability and reliability of the obtained sensing result.

For example, the third sensing data may be classified into data belonging to a first delay level (for example, a high-delay level) and data belonging to a second delay level (for example, a low-delay level) based on a delay. Different delay levels correspond to different processing manners. In an example, if the first delay associated with the fourth sensing data in the third sensing data is greater than or equal to the second threshold (for example, an instant delay threshold), the first delay belongs to the first delay level, and the sensing apparatus may use the object detection technology corresponding to the first delay level, and fuse the fourth sensing data and the second sensing data of the first vehicle. A manner of processing the sensing data at the second delay level is described below by using an NMS algorithm, and details are not described herein. Reasons for associating the obtained sensing data with different delays may include: Different sensing data is from different object terminals, and the different object terminals are located in different network environments. For example, there is a high communication delay in a mining scenario, and there is a low communication delay in an open plain scenario.

With reference to the first aspect, in a possible design, fusing the fourth sensing data and the second sensing data by using the object detection technology, to obtain the first sensing result includes: estimating a movement status of an object corresponding to the fourth sensing data, to obtain fifth sensing data; and fusing, by using the object detection technology, a detection box of an object included in the fifth sensing data and a detection box of an object included in the second sensing data, to obtain the first sensing result.

According to the foregoing method, the object included in the fifth sensing data and the object in the second sensing data may be recognized by using the detection box and the object detection technology, so that status estimation is performed on the recognized objects, and the fifth sensing data and the second sensing data are optimized with reference to a status estimation result. In this way, accuracy of the sensing result is further improved without increasing computing power burden of the vehicle.

With reference to the first aspect, in a possible design, estimating the movement status of the object corresponding to the fourth sensing data, to obtain the fifth sensing data includes: estimating, in at least one of the following manners, the movement status of the object corresponding to the fourth sensing data, to obtain the fifth sensing data: predicting a movement speed of the object by using a motion model; predicting displacement of the object based on a V2X data transmission frame rate and packet loss rate; predicting movement coordinates of the object based on historical coordinate information of the object; and correcting the movement coordinates of the object based on road information of an environment in which the object is located. It should be understood that this is merely an example description of a technical manner that may be used to estimate the movement status of the object, and does not constitute any limitation. In some embodiments, if a plurality of technical manners are used to estimate the status, processing may be performed level by level in different manners in sequence according to a preset processing rule, until a final status estimation result is obtained. Details are not described herein again.

With reference to the first aspect, in a possible design, obtaining the first sensing result based on the third sensing data and the second sensing data includes: determining sixth sensing data from the third sensing data, where a first delay associated with the sixth sensing data is less than the second threshold, and the second threshold is less than the first threshold; and fusing the sixth sensing data and the second sensing data of the first vehicle by using a non-maximum suppression NMS algorithm, to obtain the first sensing result.

According to the foregoing method, in another example, if the first delay associated with the sixth sensing data in the third sensing data is less than the second threshold, the first delay belongs to the second delay level, and there is almost no impact of a communication delay. The sensing apparatus may fuse the sixth sensing data and the second sensing data of the first vehicle by using an algorithm corresponding to the second delay level, for example, the NMS algorithm, to filter out (or remove) a detected low-score detection box with a high overlapping degree. This further improves stability and reliability of the sensing result.

With reference to the first aspect, in a possible design, the second threshold is negatively correlated with a transmission frequency of the object data. It should be noted that the transmission frequency herein is affected by communication quality of an application scenario or an environment in which an object terminal providing the object data is located. The second threshold may be a reciprocal of a transmission frequency corresponding to the application scenario or the environment in which the object terminal is located. In other words, a lower transmission frequency indicates a higher required transmission delay and a higher second threshold. During actual application, corresponding transmission frequencies may be obtained based on application scenarios or environments in which different object terminals are located, and second thresholds corresponding to the different scenarios or environments are calculated in real time based on the obtained transmission frequencies, to perform standardization processing on sensing data from different terminals. This ensures stability and reliability of a finally obtained sensing result.

With reference to the first aspect, in a possible design, obtaining the object data includes: receiving the object data from a server; or receiving the object data from the at least one object terminal. It should be understood that this is merely an example description of a manner of obtaining the object data, and does not constitute any limitation. During actual application, in an example, the first vehicle may be an unconnected vehicle (for example, a vehicle that does not support a network communication technology like Wi-Fi), and may obtain the object data from at least one surrounding object terminal by using a V2X communication technology. This expands a sensing range of the unconnected vehicle, and ensures a sensing capability of the unconnected vehicle. In another example, the first vehicle may be a connected vehicle (for example, a vehicle that supports a network communication technology like Wi-Fi), and may interact with the server through a network, to obtain, from the server, sensing data from different object terminals. This greatly improves a sensing distance, accuracy, and stability of the connected vehicle.

With reference to the first aspect, in a possible design, the method further includes: when the first sensing data is not obtained, obtaining seventh sensing data based on historical V2X data and the V2X data transmission frame rate and packet loss rate, where the seventh sensing data is used to replace the first sensing data as the object data.

According to the foregoing method, the sensing apparatus may be affected by communication quality fluctuation and the like, and cannot obtain, in a timely manner, the first V2X data updated in real time. In an optional implementation, the sensing apparatus may perform, by using the second V2X data obtained historically and based on the V2X data transmission frame rate and packet loss rate and the like, status estimation on an object corresponding to the second V2X data, to obtain the seventh sensing data, so that the seventh sensing data is used as the object data to optimize the second sensing data of the ego vehicle. This reduces problems of low accuracy and poor reliability of sensing data of the single vehicle that are affected by a sensing distance, an obstacle, and the like.

With reference to the first aspect, in a possible design, that the at least one object terminal is associated with the first vehicle includes: The at least one object terminal and the first vehicle are located on a same road; or the at least one object terminal and the first vehicle are located in a same area. For example, the at least one object terminal may include at least one of the following: a second vehicle or a roadside device.

According to the foregoing method, to ensure accuracy of the obtained object data, sensing data of an object terminal that has a location association with the first vehicle (for example, located on the same road or in the same area as the first vehicle) may be preferentially considered as the object data, to enrich the sensing data of the first vehicle. It should be understood that location association herein is merely an example rather than any limitation. In another embodiment, an object terminal that has another association with the first vehicle may be further considered. Details are not described herein again.

With reference to the first aspect, in a possible design, the first sensing data includes at least one of the following of the object terminal: a generation timestamp of the first sensing data; and positioning information, size information, a movement speed, or a movement direction of the at least one object terminal.

According to a second aspect, an embodiment of this application provides a vehicle sensing apparatus, including: an obtaining unit, configured to obtain object data, where the object data includes first V2X data from at least one object terminal, the first V2X data includes first sensing data of the at least one object terminal, and the at least one object terminal is associated with the first vehicle; and a processing unit, configured to obtain a first sensing result based on the object data and second sensing data of a first vehicle, where the first sensing result is used to assist in controlling traveling of the first vehicle.

With reference to the second aspect, in a possible design, the apparatus may further include: a determining unit, configured to determine third sensing data from the first sensing data of the at least one object terminal, where a first delay associated with the third sensing data is less than or equal to a first threshold, the first delay includes a difference between generation time of the third sensing data and time at which the obtaining unit obtains the third sensing data, and the first threshold includes a safety braking time threshold associated with an environment in which the first vehicle is located. The processing unit is specifically configured to obtain the first sensing result based on the third sensing data and the second sensing data.

With reference to the second aspect, in a possible design, the processing unit is specifically configured to: determine fourth sensing data from the third sensing data, where a first delay associated with the fourth sensing data is greater than or equal to a second threshold, and the second threshold is less than the first threshold; and fuse the fourth sensing data and the second sensing data by using an object detection technology, to obtain the first sensing result.

With reference to the second aspect, in a possible design, the processing unit is specifically configured to: estimate a movement status of an object corresponding to the fourth sensing data, to obtain fifth sensing data; and fuse, by using the object detection technology, a detection box of an object included in the fifth sensing data and a detection box of an object included in the second sensing data, to obtain the first sensing result.

With reference to the second aspect, in a possible design, estimating the movement status of the object corresponding to the fourth sensing data, to obtain the fifth sensing data includes: estimating, in at least one of the following manners, the movement status of the object corresponding to the fourth sensing data, to obtain the fifth sensing data: predicting a movement speed of the object by using a motion model; predicting displacement of the object based on a V2X data transmission frame rate and packet loss rate; predicting movement coordinates of the object based on historical coordinate information of the object; and correcting the movement coordinates of the object based on road information of an environment in which the object is located.

With reference to the second aspect, in a possible design, obtaining the first sensing result based on the third sensing data and the second sensing data includes: determining sixth sensing data from the third sensing data, where a first delay associated with the sixth sensing data is less than the second threshold, and the second threshold is less than the first threshold; and fusing the sixth sensing data and the second sensing data of the first vehicle by using an NMS algorithm, to obtain the first sensing result.

With reference to the second aspect, in a possible design, the second threshold is negatively correlated with a transmission frequency of the object data.

With reference to the second aspect, in a possible design, the obtaining unit is specifically configured to: receive the object data from a server; or receive the object data from the at least one object terminal.

With reference to the second aspect, in a possible design, the processing unit is further configured to: when the first V2X data is not obtained, obtain seventh sensing data based on second V2X data and the V2X data transmission frame rate and packet loss rate, and use the seventh sensing data as the object data, where generation time of the second V2X data is earlier than generation time of the first V2X data.

With reference to the second aspect, in a possible design, that the at least one object terminal is associated with the first vehicle includes: The at least one object terminal and the first vehicle are located on a same road; or the at least one object terminal and the first vehicle are located in a same area.

With reference to the second aspect, in a possible design, the at least one object terminal may include at least one of the following: a second vehicle or a roadside device.

With reference to the second aspect, in a possible design, the first sensing data includes at least one of the following of the object terminal: a generation timestamp of the first sensing data; and positioning information, size information, a movement speed, or a movement direction of the at least one object terminal.

According to a third aspect, an embodiment of this application provides a communication apparatus, including at least one processor and an interface circuit. The interface circuit is configured to provide data or code instructions for the at least one processor, and the at least one processor is configured to implement the method according to any one of the first aspect and the possible designs of the first aspect by using a logic circuit or executing the code instructions.

According to a fourth aspect, an embodiment of this application provides a computer-readable storage medium. The computer-readable storage medium stores program code, and when the program code is run on a computer, the computer is enabled to perform the method according to any one of the first aspect and the possible designs of the first aspect.

According to a fifth aspect, an embodiment of this application provides a computer program product. When the computer program product runs on a computer, the computer is enabled to perform the method according to any one of the first aspect and the possible designs of the first aspect or perform the method according to any one of the second aspect and the possible designs of the second aspect.

According to a sixth aspect, an embodiment of this application provides an electronic device, including a unit configured to implement the method according to any one of the first aspect and the possible designs of the first aspect. In an example, the terminal device includes but is not limited to: an intelligent transportation device (for example, an automobile, a ship, an uncrewed aerial vehicle, a train, and a truck), an intelligent manufacturing device (for example, a robot, an industrial device, smart logistics, and a smart factory), and an intelligent terminal (a mobile phone, a computer, a tablet computer, a palmtop computer, a desktop computer, a headset, a speaker, a wearable device, a vehicle-mounted device, and the like).

Based on the implementations provided in the foregoing aspects, embodiments of this application may be further combined to provide more implementations.

For technical effect that can be achieved in any possible implementation of any one of the second aspect to the sixth aspect, correspondingly refer to descriptions of technical effect that can be achieved in any possible implementation of any one of the first aspect and the second aspect. Repeated details are not described.

BRIEF DESCRIPTION OF DRAWINGS

FIG. 1 is a diagram of an application scenario to which an embodiment of this application is applicable;

FIG. 2 is a schematic flowchart of a sensing method according to an embodiment of this application;

FIG. 3 is a schematic flowchart of a sensing method according to an embodiment of this application;

FIG. 4 is a diagram of prediction optimization according to an embodiment of this application;

FIG. 5 is a diagram of a fusion processing method according to an embodiment of this application;

FIG. 6 is a diagram of another fusion processing method according to an embodiment of this application;

FIG. 7 is a diagram of a sensing apparatus according to an embodiment of this application; and

FIG. 8 is a diagram of a communication apparatus according to an embodiment of this application.

DESCRIPTION OF EMBODIMENTS

Embodiments of this application provide a vehicle sensing method and apparatus, to help expand a sensing range of a single vehicle and improve stability and reliability of a sensing result of the vehicle. The method and the apparatus are based on a same technical concept. Because problem-resolving principles of the method and the apparatus are similar, mutual reference may be made to implementations of the apparatus and the method, and repeated parts are not described again. In addition, in embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

A sensing solution of the vehicle may be applied to but is not limited to the following scenarios: expressways, highways, and mountains and mines in a mining scenario; gantries and containers in a port scenario; high-rise buildings, high bridges, mountainous areas, tunnels, or the like in a trunk logistics scenario; or another autonomous driving scenario. This is not limited in embodiments of this application.

It should be noted that the sensing solution in embodiments of this application may be implemented by a vehicle in vehicle-to-everything. The vehicle in vehicle-to-everything may perform communication by using a vehicle-to-everything (vehicle-to-everything, V2X) technology, a long term evolution-vehicle (long term evolution-vehicle, LTE-V) technology, a vehicle-to-vehicle (vehicle-to-vehicle, V2V) technology, and the like. The sensing solution may be implemented by an entire vehicle having a driving movement function, or may be implemented by another apparatus having a driving movement function in the vehicle. The another apparatus includes but is not limited to: a vehicle-mounted terminal, a vehicle-mounted controller, a vehicle-mounted module, a vehicle-mounted assembly, a vehicle-mounted component, a vehicle-mounted chip, a vehicle-mounted unit, a vehicle-mounted radar, a vehicle-mounted camera, or another sensor in the vehicle. The vehicle may implement the sensing solution by using the vehicle-mounted terminal, the vehicle-mounted controller, the vehicle-mounted module, the vehicle-mounted assembly, the vehicle-mounted component, the vehicle-mounted chip, the vehicle-mounted unit, the vehicle-mounted radar, the vehicle-mounted camera, or the like. A product form of the apparatus for implementing the sensing solution is not limited in embodiments of this application. Certainly, the sensing solution in embodiments of this application may be further applied to an intelligent terminal having a movement control function other than the vehicle, or configured on the intelligent terminal having the movement control function other than the vehicle, or configured on a component of the intelligent terminal. The intelligent terminal may be an intelligent transportation device, a smart home device, a robot, or the like. For example, the intelligent terminal includes but is not limited to an intelligent terminal or another sensor like a controller, a chip, a radar or a camera in the intelligent terminal, and another component.

It should be noted that, in embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

In addition, unless otherwise specified, ordinal numbers such as "first" and "second" mentioned in embodiments of this application are used to distinguish between a plurality of objects, but are not used to limit priorities or importance of the plurality of objects. For example, first sensing data and second sensing data are merely used to distinguish between different sensing data, but do not indicate different priorities, importance, or the like of the two pieces of sensing data. For example, in some embodiments, the first sensing data may be the same as the second sensing data.

For ease of understanding, the following provides descriptions with reference to accompanying drawings and embodiments.

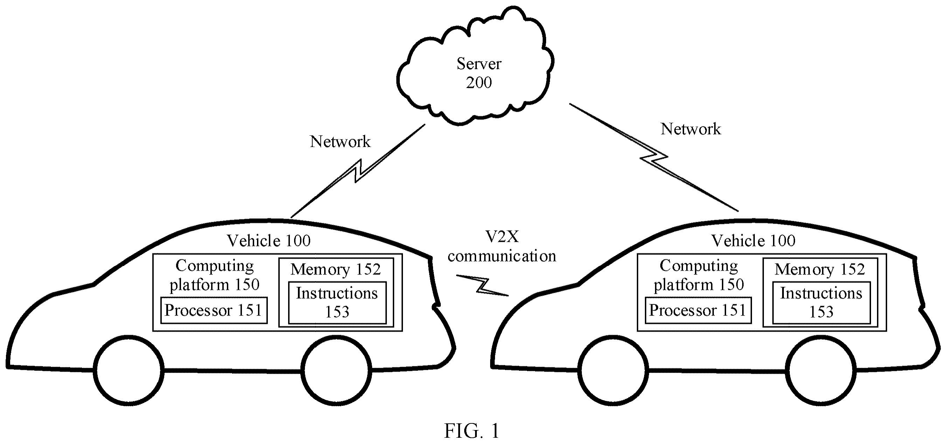

FIG. 1 is a diagram of an application scenario to which an embodiment of this application is applicable. In the application scenario, at least one vehicle 100 may be included, and different vehicles may communicate with each other by using a V2X technology. In an optional implementation, a server 200 may further be included in the application scenario, and different vehicles 100 may communicate with the server 200 through a network.

For any vehicle 100, some or all functions of the vehicle 100 are controlled by a computing platform 150. The computing platform 150 may include at least one processor 151. The processor 151 may execute instructions 153 stored in a computer-readable medium like a memory 152. In some embodiments, the computing platform 150 may alternatively be a plurality of computing devices that control an individual component or a subsystem of the vehicle 100 in a distributed manner. The processor 151 may be any conventional processor, for example, a central processing unit (central processing unit, CPU). Alternatively, the processor 151 may further include, for example, a graphics processing unit (graphics processing unit, GPU), a field-programmable gate array (field-programmable gate array, FPGA), a system-on-a-chip (system-on-chip, SOC), an application-specific integrated circuit (application-specific integrated circuit, ASIC), or a combination thereof.

In addition to the instructions 153, the memory 152 may further store data, such as a road map, route information, a location, a direction, and a speed of the vehicle, other such vehicle data, and other information. Such information may be used by the vehicle 100 and the computing platform 150 during operation of the vehicle 100 in autonomous, semi-autonomous, and/or manual modes.

It should be understood that a structure of the vehicle in FIG. 1 should not be understood as a limitation on embodiments of this application.

Optionally, the vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application.

In addition, the server 200 may further be included in the application scenario shown in FIG. 1. In this embodiment of this application, the server 200 may collect first sensing data from different object terminals, and obtain a first sensing result based on the collected first sensing data. The first sensing result has a larger sensing range than a sensing range of a single vehicle, has specific stability and reliability, and can be used to more accurately assist in controlling traveling of a first vehicle. This improves traveling efficiency or driving safety of the first vehicle.

In an embodiment, the server 200 may alternatively be implemented by using a virtual machine.

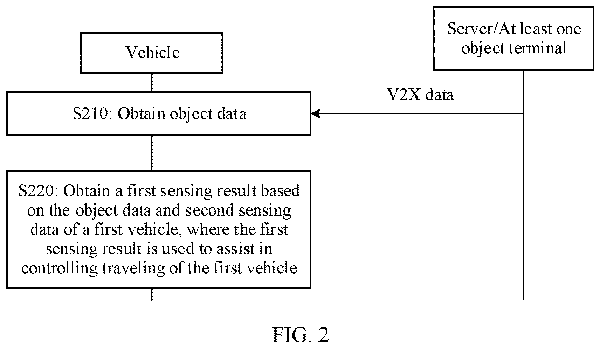

FIG. 2 is a schematic flowchart of a sensing method according to an embodiment of this application. The method may be implemented by a sensing apparatus on a vehicle. The sensing apparatus may be deployed on the vehicle shown in FIG. 1, or the sensing apparatus may be deployed, for example, on the server shown in FIG. 1. For example, the sensing apparatus is deployed on a first vehicle. As shown in FIG. 2, the sensing method may include the following steps.

S210: The sensing apparatus obtains object data.

In this embodiment of this application, the object data may include first vehicle-to-everything (vehicle-to-everything, V2X) data from at least one object terminal, the V2X data may include first sensing data of the at least one object terminal, and the at least one object terminal may be associated with the first vehicle.

The first vehicle may be any vehicle that allows the sensing apparatus to provide an auxiliary control service/function. The at least one object terminal may include a vehicle other than the first vehicle, or may include a road side unit (road side unit, RSU) (or referred to as a roadside device), or may include another terminal device that supports a V2X technology. An association between the at least one object terminal and the first vehicle may be a location association. For example, the at least one object terminal may be located in a first distance range around the first vehicle. For example, the first distance range may be in a circular area that uses the first vehicle as a center and uses 200 meters as a radius. Alternatively, for example, the at least one object terminal may be located on a same road as the first vehicle, or on a road adjacent to a road on which the first vehicle is located. The association between the first vehicle and the at least one object terminal is not limited in embodiments of this application.

Any one of the at least one object terminal may have (or be associated with) one or more of sensing devices such as a camera, a millimeter-wave radar, a lidar, and a global positioning system (global positioning system, GPS), and may detect an object around the object terminal by using different sensing technologies, and obtain the first sensing data. During implementation of S210, the object terminal may provide the obtained first sensing data to the sensing apparatus in real time or periodically, so that the sensing apparatus fuses first sensing data from different object terminals, to obtain a more accurate sensing result for the first vehicle.

For example, the first sensing data provided by any terminal in the at least one object terminal may be determined based on a sensing capability of the terminal, may include association data that is of another surrounding object and that is obtained by the terminal through a sensing device on the terminal, and may further include sensed association data of the terminal.

For example, the at least one object terminal may include a vehicle (or referred to as a second vehicle, or referred to as another vehicle for short) other than the first vehicle. If the second vehicle has a camera, the second vehicle may be in a moving or non-moving state, first sensing data provided by the second vehicle may include an image or a video captured by the second vehicle through the camera, and the sensed image or video may include a person, a tree, a transportation facility, a building, or the like around the second vehicle. If the second vehicle has a lidar or a millimeter-wave radar, the first sensing data provided by the second vehicle may further include associated data that is of another surrounding object and that is detected by the lidar or the millimeter-wave radar, including but not limited to a distance, an orientation, a height, a speed, a posture, a shape, and the like of the object. If the second vehicle has a GPS, the first sensing data provided by the second vehicle may further include location information obtained by the second vehicle through the GPS. If the second vehicle has a gyroscope, the first sensing data provided by the second vehicle may further include a heading angle of the second vehicle. If the second vehicle has a speed sensor, the first sensing data provided by the second vehicle may further include a speed of the second vehicle. Similarly, if the second vehicle has a temperature sensing device, a humidity sensing device, a barometric pressure sensing device, or the like, the first sensing data provided by the second vehicle may further include obtained temperature data, humidity data, barometric pressure data, or the like.

It should be understood that those are merely example descriptions of the first sensing data in this embodiment of this application, and do not constitute any limitation. During actual application, the at least one object terminal may further include a terminal of another type other than the another vehicle, for example, a roadside device. The terminal of the another type may have various sensing devices in the foregoing examples, or may have another sensing device that is not shown above, and may obtain corresponding first sensing data through a sensing device. Details are not described herein again.

In addition, to fully expand a sensing capability of the first vehicle as much as possible, as a supplement, in an optional implementation, the at least one object terminal may further provide the sensing apparatus with some data (for example, data stored in a memory of the vehicle) that can be obtained without using a sensing device. For example, if the object terminal is the second vehicle, the first sensing data provided by the second vehicle may further include attribute information such as a size of the second vehicle. In this way, the sensing apparatus fuses sensing data and/or attribute information from different object terminals, to obtain a more accurate sensing result. During specific implementation, the object terminal may package, in a predetermined data format, the first sensing data that needs to be uploaded, and then provide the packaged first sensing data for the sensing apparatus. A data transmission manner is not limited in embodiments of this application. In addition, the first sensing data may further include timestamp information of the data. The sensing apparatus may further evaluate availability of the received data by using the timestamp information carried in the obtained data, to improve reliability of the data that needs to be used, and ensure correctness of a decision of the sensing apparatus. The following describes the sensing method in this embodiment of this application with reference to specific content of the first sensing data. Details are not described herein.

It should be understood that those are merely example descriptions of the first sensing data, and do not constitute any limitation. In another embodiment, the specific content of the first sensing data may be increased or reduced based on a type of the object terminal, a sensing capability of the object terminal, or a communication capability of the terminal device. Details are not described herein again.

It should be noted that, in the foregoing descriptions, a quantity of implementations in which the at least one object terminal "provides" the first sensing data for the sensing apparatus is not limited to one.

In an example, the sensing apparatus may be deployed on the first vehicle, and the first vehicle and the at least one object terminal may support the V2X technology. The at least one object terminal may send, to the first vehicle in real time or periodically through V2X communication, the first sensing data obtained by the at least one object terminal. In this case, if the first vehicle is not connected to a network or is in a scenario/environment in which the first vehicle cannot be connected to the network or network quality is poor, the first vehicle may still use, as a supplement to sensing data of the first vehicle, V2X data obtained from another terminal. In this way, a sensing range of the first vehicle is expanded, a sensing capability of the first vehicle that is not connected to the network is maintained, and stability and reliability of a sensing result finally obtained by the first vehicle is improved.

Alternatively, in another example, the sensing apparatus may be deployed on the first vehicle, and both the at least one object terminal and the first vehicle may be in a networkconnected state, and may communicate with a server through a network. The at least one object terminal may send, to the server in real time or periodically through the network, the first sensing data obtained by the at least one object terminal. The first vehicle may request to obtain the object data from the server. In response to the request from the first vehicle, the server may make a comprehensive decision by using various types of information obtained by the server, and then send, to the first vehicle, first sensing data that is from different object terminals associated with the first vehicle and that is used as the object data. In this way, if the first vehicle is in the networkconnected state, the first vehicle obtains more sensing data by interacting with the server. This greatly improves a sensing distance, accuracy, and stability of the first vehicle.

It should be understood that the foregoing two examples are merely examples for describing a manner in which the sensing apparatus deployed on the first vehicle obtains sensing data from another terminal, and do not constitute any limitation. In another embodiment, the first vehicle may support both the V2X technology and a network communication technology, and the first vehicle may select, based on a requirement, how to obtain the sensing data from the another terminal. This is not limited in embodiments of this application.

S220: The sensing apparatus may perform data parsing based on the object data and second sensing data of the first vehicle, to obtain a first sensing result, where the first sensing result may be used to assist in controlling traveling of the first vehicle.

The second sensing data of the first vehicle is similar to the first sensing data of the second vehicle described above, and may include associated data that is of another surrounding object and that is sensed by the first vehicle through various sensing devices of the first vehicle, or may include sensed associated data of the first vehicle. For details, refer to the foregoing related descriptions of the first sensing data. Details are not described herein again.

For example, the first sensing result may be used for but is not limited to the following driving assistance functions: highway assist (highway assist, HWA) driving, adaptive cruise control (adaptive cruise control, ACC), traffic jam assistant (traffic jam assistant, TJA), auto lane change (auto lane change, ALC) assistance, a narrow-lane assistance system (SDIS), autonomous emergency braking (autonomous emergency braking, AEB), augmented reality (augmented reality, AR) navigation, an automated parking assist (automated parking assist, APA) system, remote parking, blind spot field of view monitoring, narrow-lane assistance, door opening warning, lane keeping, rear vehicle warning, curve cruise, and the like. This is not limited in embodiments of this application.

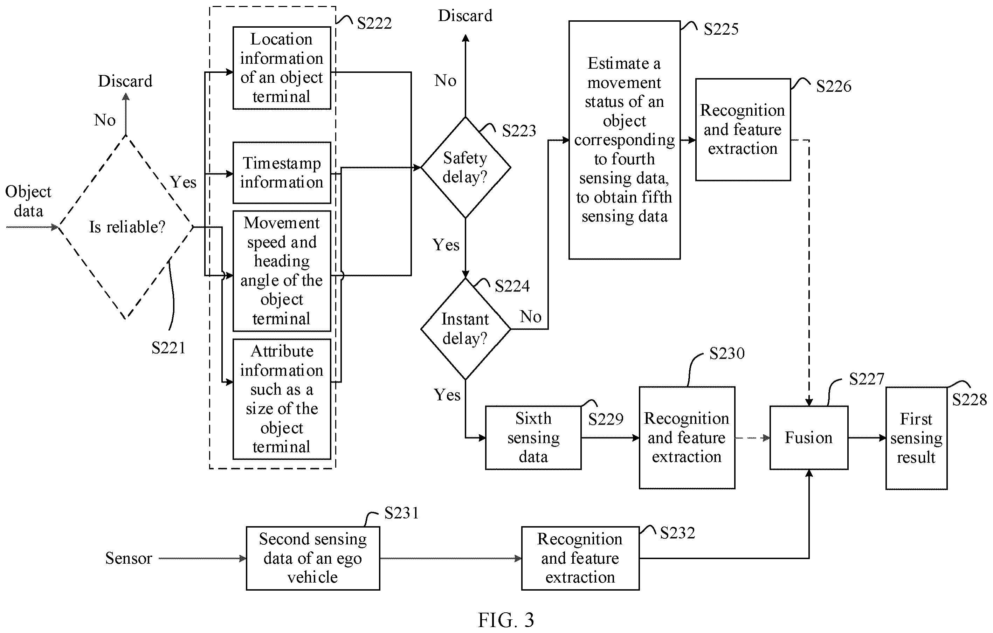

During specific implementation of S220, the sensing apparatus may first evaluate reliability and/or availability of the obtained first sensing data, and determine, based on an evaluation result, how to obtain the first sensing result by using the object data and the second sensing data of the first vehicle. In a possible implementation, as shown in FIG. 3, the sensing method may include the following steps.

S221 (Optional step): The object data obtained by the sensing apparatus in S210 may include first sensing data from each object terminal, and the sensing apparatus may first evaluate reliability of the first sensing data based on content of the first sensing data. For example, the first sensing data may include reliability information of the first sensing data. The sensing apparatus may determine, based on the reliability information, whether the first sensing data is reliable. If the first sensing data is reliable, S222 is performed. If the first sensing data is unreliable, the corresponding first sensing data is discarded. The reliability information of the first sensing data may be a reliability score of the first sensing data, and may be provided by the object terminal that provides the first sensing data. If some terminals do not have this function, a process of S221 may be skipped for first sensing data provided by these terminals. In an optional implementation, if the first sensing data is provided by the server for the sensing apparatus, the first sensing data may alternatively be sensing data that meets a reliability requirement and that is obtained after the server performs reliability analysis, a process of S221 may be skipped.

S222: The sensing apparatus may parse the first sensing data provided by each object terminal, to obtain a parsing result. For example, the parsing result may include but is not limited to parsing attribute information such as location information of the object terminal that provides the first sensing data, generation timestamp information of the first sensing data, a first delay, a movement speed and a heading angle of the object terminal, or a size of the object terminal.

It should be understood that this is merely an example description of the parsing result and does not constitute any limitation. During actual application, the sensing apparatus may parse the obtained first sensing data based on various driving assistance functions of the first vehicle, to obtain data required for implementing a corresponding driving assistance function. Details are not described herein again.

In this embodiment of this application, in consideration of driving safety and instant performance, a time delay (delay for short)-based multi-level processing architecture may be designed, and may include a first delay level, a second delay level, and a third delay level. The first delay level may be associated with a data processing means, for example, an object detection technology. The second delay level may be associated with another data processing means, for example, an NMS algorithm. The third delay level may be associated with another data processing means, for example, discarding. The sensing apparatus may determine, based on a level to which a first delay associated with the obtained first sensing data belongs, how to process the obtained first sensing data in a subsequent method, to obtain a corresponding sensing result.

In an optional implementation, for example, the first delay $\Delta t$ associated with the obtained first sensing data may be defined as a difference between generation time of the first sensing data and time at which the first vehicle obtains the first sensing data, which is shown in the following expression (1):

$$\Delta t = |T_r - T_u| \qquad (1)$$

Herein, $T_r$ represents a timestamp value in a case in which the first vehicle (namely, an ego vehicle) receives (receive) the first sensing data, $T_u$ represents a timestamp value in a case in which another vehicle uploads (upload) the first sensing data (namely, the generation time of the first sensing data), and $\Delta t$ is a difference between the two timestamp values, and is used as the first delay.

Due to different application scenarios or environments of commercial vehicles, vehicles in different scenarios or environments have different acceptable safety braking delays. The safety braking delay is defined as a ratio of a safety braking distance in a corresponding scenario or environment to a maximum speed per hour in the scenario or environment, which is shown in the following expression (2):

$$\Delta T_s = \frac{S_{safe}}{v_{max}} \qquad (2)$$

Herein, $S_{safe}$ represents the safety braking distance, and $v_{max}$ represents the maximum speed per hour in the scenario. It is assumed that the ego vehicle can decelerate instantaneously. The safety braking delay $\Delta T_s$ is obtained by dividing the safety braking distance by the maximum speed per hour.

However, the vehicle usually cannot decelerate instantaneously during actual application. Therefore, if the first delay associated with the first sensing data obtained by the first vehicle is greater than the safety braking delay in the scenario or the environment in which the first vehicle is currently located, even if the first vehicle obtains the corresponding sensing result by using the obtained first sensing data, the sensing result cannot provide effective help when the driving assistance function is subsequently implemented. Therefore, the first sensing data whose first delay is greater than or equal to the safety braking delay currently corresponding to the first vehicle is ineffective, in other words, has no effectiveness.

Therefore, in S223, the sensing apparatus may determine, based on the parsing result, whether the obtained first sensing data meets a requirement of the safety braking delay, that is, determine effectiveness. If the obtained first sensing data meets the requirement of the safety braking delay, for example, the first delay is less than or equal to a first threshold, S224 is performed. If the obtained first sensing data does not meet the requirement of the safety braking delay, for example, the first delay is greater than a first threshold (corresponding to the third delay level), the first sensing data is not used (or is discarded).

In this way, the sensing apparatus determines third sensing data from the first sensing data of the at least one object terminal, where a first delay associated with the third sensing data is less than or equal to the first threshold, the first delay includes a difference between generation time of the third sensing data and time at which the first vehicle obtains the third sensing data, and the first threshold includes a safety braking delay threshold associated with an environment in which the first vehicle is located.

For example, in a mining scenario, it is usually specified that a full speed does not exceed 30 km/h (namely, a maximum speed per hour) during driving, and a vehicle following distance (namely, a safety distance) is required to be not less than 30 m. Values of the maximum speed per hour and the safety distance that are specified in the mining scenario are substituted into the foregoing expression (2), so that $\Delta T_s$ is 3.6s. Herein, $\Delta T_s$ may be used as the first threshold, and is used to determine whether the obtained data needs to be retained. Sensing data associated with a timestamp value that exceeds the safety braking delay is discarded, and remaining third sensing data may be retained. In this way, the corresponding sensing result is obtained by using the third sensing data in a subsequent method.

In addition, in consideration of communication quality of a scenario or an environment in which the first vehicle is located, there may be a delay in obtaining the object data by the first vehicle. For high-delay sensing data and low-delay sensing data in the third sensing data, the sensing apparatus may use different data processing means, to ensure accuracy and reliability of the obtained sensing result.

S224: The sensing apparatus may perform instant determining on the third sensing data, compare the first delay associated with the third sensing data with a second threshold (for example, an instant (instant) delay threshold), and determine fourth sensing data and/or sixth sensing data from the third sensing data. A first delay associated with the fourth sensing data is greater than or equal to the second threshold, a first delay associated with the sixth sensing data is less than the second threshold, and the second threshold is less than the first threshold. For the fourth sensing data, a data processing process of S225 to S228 may be performed. For the sixth sensing data, a data processing process of S229 to S231 is performed.

For example, when S224 is implemented, the second threshold may be determined based on a transmission frequency of the data. For example, the second threshold is negatively correlated with the transmission frequency of the object data.

Specifically, for example, the sensing apparatus may select a narrow time window. A size of the window may be used as the instant delay threshold, and is used as a delay for instant determining in S224. $\Delta T_i$ represents the instant delay threshold, namely, the second threshold. A value of $\Delta T_i$ may be determined based on a corresponding transmission frequency used for data transmission in the scenario or the environment in which the first vehicle is located. For example, data transmission is performed through a network in a mining scenario. If a frequency at which a cloud server sends the V2X data to the first vehicle is 10 Hz, a minimum delay of receiving the V2X data by the first vehicle is 0.1s (a reciprocal of 10 Hz), and $\Delta T_i$ may be selected as 0.1s. Alternatively, in consideration of impact of network communication quality on data transmission, there may be a specific delay when the first vehicle receives data. Therefore, it may be considered that a value of $\Delta T_i$ is slightly greater than the minimum delay. For example, $\Delta T_i$ is selected as 0.15s. Based on the selected second threshold, if a first delay associated with first sensing data that is obtained by the first vehicle and that is from another object terminal is less than or equal to the second threshold, the sensing data meets an instant requirement, and corresponds to the second delay level. If a first delay associated with first sensing data that is obtained by the first vehicle and that is from another object terminal is greater than the second threshold, the sensing data does not meet an instant requirement, and corresponds to the first delay level. In this way, in subsequent steps, the corresponding sensing data may be separately processed based on a data processing means corresponding to the first delay level or the second delay level, to obtain a corresponding sensing result.

Another case that needs to be considered is that a packet loss may further occur during transmission of the V2X data, that is, the sensing apparatus on the first vehicle does not receive, in a frame, V2X data that is instantly transmitted. In this case, it may be considered that after a time offset (offset) is performed on obtained historical V2X data (for example, a previous frame) in a specific manner, the sensing data is used as the fourth sensing data and is processed based on a data processing means corresponding to the first delay level (namely, a high-delay case).

In an example, the data processing means corresponding to the first delay level may include an object detection technology. The sensing apparatus on the first vehicle may fuse the fourth sensing data and the second sensing data of the first vehicle by using the object detection technology, to obtain the first sensing result. The process may include S225 to S228. Details are described below.

S225: The sensing apparatus estimates a movement status of an object corresponding to the fourth sensing data, to obtain fifth sensing data.

For example, during specific implementation, the sensing apparatus may estimate, in at least one of the following manners, the movement status of the object corresponding to the fourth sensing data, to obtain the fifth sensing data:

predicting a movement speed of the object by using a motion model;
predicting displacement of the object based on a V2X data transmission frame rate and packet loss rate;
predicting movement coordinates of the object based on historical coordinate information of the object; and
correcting the movement coordinates of the object based on road information of an environment in which the object is located.

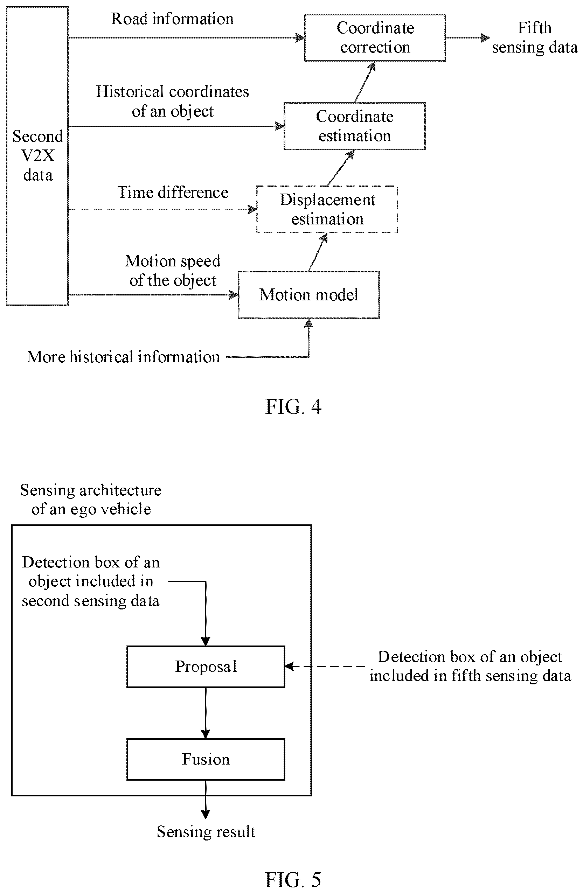

For example, as shown in FIG. 4, the sensing apparatus may obtain second V2X data and more historical information based on timestamp information associated with the fourth sensing data. Generation time of the second V2X data is earlier than generation time of the first V2X data, and the second V2X data may include but is not limited to a movement speed of an object, historical coordinate information of the object, road information, and the like that are collected at historical time. The more historical information may include any factor that may affect vehicle driving at historical time, for example, weather, daytime/night, a traffic restriction strategy, and traffic congestion information. This is not limited in embodiments of this application. In one aspect, the sensing apparatus may perform state estimation in a Kalman filtering manner based on the obtained more historical information. In another aspect, the sensing apparatus may predict, by using the motion model based on a motion speed that is of the object and that is included in the second V2X data, the movement speed of the object corresponding to the fourth sensing data. Further, the sensing apparatus may estimate current coordinates of the object based on historical coordinates of the object. Further, the sensing apparatus may further correct the coordinates of the object based on the road information (for example, including a road drivable area and traffic signal information), to finally obtain the fifth sensing data.

In another optional implementation, in the packet loss case described above, as shown in FIG. 4, the sensing apparatus may further obtain a time difference between the second V2X data and current time, and the time difference may be used as time information for the time offset. The sensing apparatus may further perform, based on the predicted movement speed of the object and the time difference, displacement estimation on the object corresponding to the fourth sensing data.

It should be understood that this is merely an example description of a technical means used for the obtained sensing data at the first delay level (for example, there is a high delay or a packet loss) in this embodiment of this application, and does not constitute any limitation. In another embodiment, the sensing apparatus may be configured to support a plurality of means for performing state estimation. The sensing apparatus may adapt a required data processing means based on historical data or historical information that can be obtained, and obtain a final fifth sensing result by performing a series of processing steps. Details are not described herein again.

S226: The sensing apparatus performs recognition and feature extraction on an object in the fifth sensing data by using the object detection technology, to determine a detection box of the object included in the fifth sensing data.

S227: The sensing apparatus fuses, based on a sensing architecture of the first vehicle, the detection box of the object included in the fifth sensing data and a detection box of an object included in the second sensing data, to obtain the first sensing result.

S228: The sensing apparatus outputs the first sensing result.

The sensing apparatus may obtain and process the second sensing data by performing S231 and S232. For example, in S231, the sensing apparatus may obtain the second sensing data through at least one sensor. S232: The sensing apparatus may perform recognition and feature extraction on the object in the second sensing data by using the object detection technology, to obtain a sensing result of the ego vehicle, for example, including the detection box of the object included in the second sensing data.

The object detection technology equipped in the sensing apparatus may specifically use a two-stage object detection network. As shown in FIG. 5, the sensing apparatus may perform, in a first stage (first stage), recognition and extraction on the second sensing data of the first vehicle, namely, the ego vehicle, in S232, to determine the detection box of the object included in the second sensing data. In a second stage (second stage), the detection box that is of the object included in the second sensing data and that is output in the first stage is optimized and adjusted, in other words, the sensing result is optimized. For example, a detection box that is included in the fifth sensing data and that is obtained through prediction and optimization in S225 and S226 is used as an additional proposal (proposal), and the detection box included in the fifth sensing data and the detection box of the object included in the second sensing data obtained in S232 are fused, to obtain the final sensing result. Therefore, compared with a sensing result obtained by using only the sensing data of the ego vehicle, a result of combining a supplement of the sensing data from the another object terminal and a detection box obtained through prediction and correction is more accurate. In this way, a sensing architecture of a single vehicle can be reused, and quality of the detection box can be improved without increasing additional computing power burden of the vehicle. This can ensure accuracy and reliability of the obtained sensing result.

In another example, the data processing means corresponding to the second delay level may include a non-maximum suppression (Non-maximum suppression, NMS) algorithm. The sensing apparatus on the first vehicle may fuse the sixth sensing data and the second sensing data of the first vehicle by using the NMS algorithm, to obtain the first sensing result. The process may include S229, S230, S227, and S228. Details are described below.

S229: The sensing apparatus determines the sixth sensing data from the third sensing data. A first delay associated with the sixth sensing data is less than the second threshold, and the second threshold is less than the first threshold.

S230: The sensing apparatus performs recognition and feature extraction on an object in the sixth sensing data by using the object detection technology, to obtain a detection box of the object included in the sixth sensing data.

S227: The sensing apparatus fuses, based on the sensing architecture of the first vehicle by using the NMS algorithm, the detection box of the object included in the sixth sensing data and the detection box of the object included in the second sensing data, to obtain the first sensing result.

S228: The sensing apparatus outputs the first sensing result.

During specific implementation of S227, the sensing apparatus does not simply match a plurality of sensing results to output a sensing result, but may calculate, by using the NMS algorithm, an intersection over union (Intersection over Union, IOU) between the detection box of the object included in the sixth sensing data and the detection box of the object included in the second sensing data, filter out a low-score detection box with a high overlapping degree of the objects in the two types of sensing data, and use a final fusion sensing result as a final sensing result of a current frame. For example, the sensing result is represented as the first sensing result.

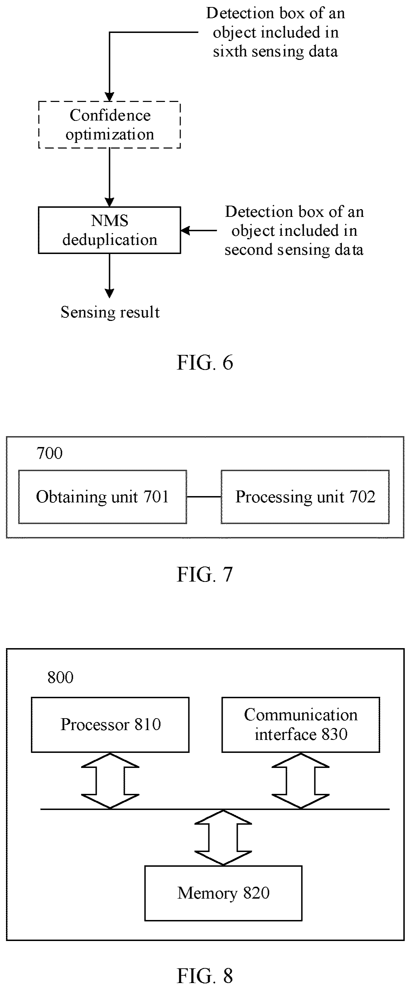

In an optional implementation, as shown in FIG. 6, to improve a reliability degree of data fusion, before removing the low-score detection box with the high overlapping degree by using the NMS algorithm, the sensing apparatus may further perform, based on reliability indicators and different delay degrees that are associated with the sixth sensing data and/or the second sensing data, confidence optimization on the object included in the sixth sensing data and the object included in the second sensing data. For example, confidence of different sensing data is calculated based on a reliability indicator or a time difference, and the confidence may represent a reliability degree of corresponding sensing data. The sensing apparatus may remove, from the detection box corresponding to the sixth sensing data and the detection box corresponding to the second sensing data, a detection box that does not meet a confidence requirement, then filter out a low-score detection box with a high overlapping degree of the objects in the two types of sensing data by using the NMS algorithm, and use a final fusion sensing result as a final sensing result of a current frame. This further ensures accuracy and reliability of the sensing result.

It should be noted that, in this embodiment of this application, the method shown in FIG. 3 is an extension of sensing data of a single vehicle (for example, the first vehicle), namely, the ego vehicle. The sensing data from the at least one object terminal is collected by using the V2X technology or through a network, the sensing data from the at least one object terminal is used as a supplement to the sensing data of the first vehicle, and corresponding data processing is performed, to obtain a more accurate sensing result, so as to assist in controlling traveling of the first vehicle. According to this solution, a sensing range of the single vehicle can be expanded, and accuracy, stability, and reliability of the sensing result can be improved by using different data processing means for different sensing data.

It should be noted that different method branches shown in FIG. 3 are descriptions of processing means for the first sensing data in different cases, and do not limit specific implementation of the method. In some embodiments, if the first sensing data from the at least one object terminal includes both the fourth sensing data and the sixth sensing data, both S225 to S228 and S229, S230, S227, and S228 may be performed. In this case, when S227 is specifically performed, the sensing apparatus fuses, based on the sensing architecture of the first vehicle by using the NMS algorithm, the detection box of the object included in the fifth sensing data, the detection box of the object included in the sixth sensing data, and the detection box of the object included in the second sensing data, to obtain the first sensing result. For a processing procedure, refer to the foregoing related descriptions. Details are not described herein again.

An embodiment of this application further provides a vehicle sensing apparatus, configured to perform the method performed by the sensing apparatus in the foregoing method embodiments. For related features, refer to the foregoing method embodiments. Details are not described herein again.

As shown in FIG. 7, the apparatus 700 may include: an obtaining unit 701, configured to obtain object data, where the object data includes vehicle-to-everything V2X data from at least one object terminal, the V2X data includes first sensing data of the at least one object terminal, and the at least one object terminal is associated with a first vehicle; and a processing unit 702, configured to obtain a first sensing result based on the object data and second sensing data of the first vehicle, where the first sensing result is used to assist in controlling traveling of the first vehicle. For a specific implementation, refer to the method steps implemented by the sensing apparatus in the foregoing method embodiments. Details are not described herein again.

It should be understood that division into units in the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a central processing unit (central processing unit, CPU) or a microprocessor, and the memory is a memory inside the apparatus or a memory outside the apparatus. Alternatively, the unit in the apparatus may be implemented in a form of hardware circuit, and functions of some or all of the units may be implemented through a design of the hardware circuit. The hardware circuit may be understood as one or more processors. For example, in an implementation, the hardware circuit is an application-specific integrated circuit (application-specific integrated circuit, ASIC), and functions of some or all of the units are implemented through a design of a logical relationship between elements in the circuit. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement functions of some or all of the foregoing units. All units in the foregoing apparatus may be implemented in a form of software invoked by the processor, or all units may be implemented in a form of hardware circuit, or some units may be implemented in a form of software invoked by the processor, and a remaining part may be implemented in a form of hardware circuit.

In embodiments of this application, the processor is a circuit having a signal processing capability. In an implementation, the processor may be a circuit having an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit in the foregoing apparatus may be one or more processors (or processing circuits) configured to implement the foregoing methods, for example, a CPU, a GPU, an NPU, a TPU, a DPU, a microprocessor, a DSP, an ASIC, or an FPGA, or a combination of at least two of these processor forms.

In addition, all or some of the units in the foregoing apparatus may be integrated, or may be implemented independently. In an implementation, these units are integrated together and implemented in a form of system-on-a-chip (system-on-a-chip, SOC). The SOC may include at least one processor, configured to implement any one of the methods or implement functions of the units in the apparatus. Types of the at least one processor may be different. For example, the at least one processor includes a CPU and an FPGA, a CPU and an artificial intelligence processor, or a CPU and a GPU.

In a simple embodiment, a person skilled in the art may figure out that the communication apparatus in the foregoing embodiment may be in a form shown in FIG. 8.

An apparatus 800 shown in FIG. 8 includes at least one processor 810 and a communication interface 830. In an optional design, the apparatus 800 may further include a memory 820.

A specific connection medium between the processor 810 and the memory 820 is not limited in embodiments of this application.

In the apparatus shown in FIG. 8, when communicating with another device, the processor 810 may transmit data through the communication interface 830.

When the communication apparatus is in the form shown in FIG. 8, the processor 810 in FIG. 8 may invoke computer-executable instructions stored in the memory 820, to enable the apparatus 800 to perform any one of the foregoing method embodiments.

An embodiment of this application further relates to a chip system. The chip system includes a processor, configured to invoke a computer program or computer instructions stored in a memory, to enable the processor to perform the method according to any one of the foregoing embodiments.

In a possible implementation, the processor is coupled to the memory through an interface.

In a possible implementation, the chip system may alternatively directly include a memory. The memory stores a computer program or computer instructions.

For example, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

An embodiment of this application further relates to a processor. The processor is configured to invoke a computer program or computer instructions stored in a memory, to enable the processor to perform the method according to any one of the foregoing embodiments.

In an example, in embodiments of this application, the processor is an integrated circuit chip, and has a signal processing capability. For example, the processor may be an FPGA, may be a general-purpose processor, a DSP, an ASIC, or another programmable logic device, a discrete gate or transistor logic device, or a discrete hardware component, or may be a system-on-a-chip (system-on-a-chip, SoC), or may be a CPU, or may be a network processor (network processor, NP), or may be a microcontroller unit (microcontroller unit, MCU), or may be a PLD or another integrated chip, and may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor.

It should be understood that embodiments of this application may be provided as a method, a system, or a computer program product.

In a possible implementation, an embodiment of this application provides a computer-readable storage medium. The computer-readable storage medium stores program code. When the program code is run on a computer, the computer is enabled to perform the foregoing method embodiments.

In a possible implementation, an embodiment of this application provides a computer program product. When the computer program product runs on a computer, the computer is enabled to perform the foregoing method embodiments.

Therefore, this application may use a form of hardware-only embodiment, softwareonly embodiment, or embodiment with a combination of software and hardware. In addition, this application may use a form of computer program product implemented on one or more computer-usable storage media (including but not limited to a disk memory, a CD-ROM, an optical memory, and the like) that include computer-usable program code.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to embodiments of this application without departing from the scope of embodiments of this application. In this way, this application is intended to cover these modifications and variations of embodiments of this application provided that they fall within the scope of protection defined by the following claims and their equivalent technologies. In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

**Claims**

1. A vehicle sensing method, applied to a first vehicle, wherein the method comprises:

   obtaining object data, wherein the object data comprises first V2X data from at least one object terminal, the first V2X data comprises first sensing data of the at least one object terminal, and the at least one object terminal is associated with the first vehicle; and
   obtaining a first sensing result based on the object data and second sensing data of the first vehicle, wherein the first sensing result is used to assist in controlling traveling of the first vehicle.

2. The method according to claim 1, wherein the method further comprises:

   determining third sensing data from the first sensing data of the at least one object terminal, wherein a first delay associated with the third sensing data is less than or equal to a first threshold, the first delay comprises a difference between generation time of the third sensing data and time at which the first vehicle obtains the third sensing data, and the first threshold comprises a safety braking time threshold associated with an environment in which the first vehicle is located; and
   obtaining the first sensing result based on the object data and the second sensing data of the first vehicle comprises:
   obtaining the first sensing result based on the third sensing data and the second sensing data.

3. The method according to claim 2, wherein obtaining the first sensing result based on the third sensing data and the second sensing data comprises:

   determining fourth sensing data from the third sensing data, wherein a first delay associated with the fourth sensing data is greater than or equal to a second threshold, and the second threshold is less than the first threshold; and
   fusing the fourth sensing data and the second sensing data by using an object detection technology, to obtain the first sensing result.

4. The method according to claim 3, wherein fusing the fourth sensing data and the second sensing data by using the object detection technology, to obtain the first sensing result comprises:

   estimating a movement status of an object corresponding to the fourth sensing data, to obtain fifth sensing data; and
   fusing, by using the object detection technology, a detection box of an object comprised in the fifth sensing data and a detection box of an object comprised in the second sensing data, to obtain the first sensing result.

5. The method according to claim 4, wherein estimating the movement status of the sensed object in the fourth sensing data, to obtain the fifth sensing data comprises:
   estimating, in at least one of the following manners, the movement status of the object corresponding to the fourth sensing data, to obtain the fifth sensing data:

predicting a movement speed of the object by using a motion model;

predicting displacement of the object based on a V2X data transmission frame rate and packet loss rate;

predicting movement coordinates of the object based on historical coordinate information of the object; and

correcting the movement coordinates of the object based on road information of an environment in which the object is located.

6. The method according to any one of claims 2 to 5, wherein obtaining the first sensing result based on the third sensing data and the second sensing data comprises:

determining sixth sensing data from the third sensing data, wherein a first delay associated with the sixth sensing data is less than the second threshold, and the second threshold is less than the first threshold; and

fusing the sixth sensing data and the second sensing data of the first vehicle by using a non-maximum suppression NMS algorithm, to obtain the first sensing result.

7. The method according to any one of claims 3 to 6, wherein the second threshold is negatively correlated with a transmission frequency of the object data.

8. The method according to any one of claims 1 to 7, wherein obtaining the object data comprises:

receiving the object data from a server; or

receiving the object data from the at least one object terminal.

9. The method according to any one of claims 1 to 8, wherein the method further comprises:
when the first V2X data is not obtained, obtaining seventh sensing data based on second V2X data and the V2X data transmission frame rate and packet loss rate, and using the seventh sensing data as the object data, wherein generation time of the second V2X data is earlier than generation time of the first V2X data.

10. The method according to any one of claims 1 to 9, wherein that the at least one object terminal is associated with the first vehicle comprises:

the at least one object terminal and the first vehicle are located on a same road; or

the at least one object terminal and the first vehicle are located in a same area.

11. The method according to claim 10, wherein the at least one object terminal comprises at least one of the following: a second vehicle or a roadside device.

12. The method according to any one of claims 1 to 11, wherein the first sensing data comprises at least one of the following of the object terminal:
a generation timestamp of the first sensing data; and positioning information, size information, a movement speed, or a movement direction of the at least one object terminal.

13. A vehicle sensing apparatus, wherein the sensing apparatus comprises:

an obtaining unit, configured to obtain object data, wherein the object data comprises first V2X data from at least one object terminal, the first V2X data comprises first sensing data of the at least one object terminal, and the at least one object terminal is associated with the first vehicle; and

a processing unit, configured to obtain a first sensing result based on the object data and second sensing data of the first vehicle, wherein the first sensing result is used to assist in controlling traveling of the first vehicle.

14. The apparatus according to claim 13, further comprising:

a determining unit, configured to determine third sensing data from the first sensing data of the at least one object terminal, wherein a first delay associated with the third sensing data is less than or equal to a first threshold, the first delay comprises a difference between generation time of the third sensing data and time at which the obtaining unit obtains the third sensing data, and the first threshold comprises a safety braking time threshold associated with an environment in which the first vehicle is located, wherein the processing unit is specifically configured to: obtain the first sensing result based on the third sensing data and the second sensing data.

15. The apparatus according to claim 14, wherein the processing unit is specifically configured to:

determine fourth sensing data from the third sensing data, wherein a first delay associated with the fourth sensing data is greater than or equal to a second threshold, and the second threshold is less than the first threshold; and

fuse the fourth sensing data and the second sensing data by using an object detection technology, to obtain the first sensing result.

**16.** The apparatus according to claim 15, wherein the processing unit is specifically configured to:

estimate a movement status of an object corresponding to the fourth sensing data, to obtain fifth sensing data; and
fuse, by using the object detection technology, a detection box of an object comprised in the fifth sensing data and a detection box of an object comprised in the second sensing data, to obtain the first sensing result.

**17.** The apparatus according to claim 16, wherein estimating the movement status of the object corresponding to the fourth sensing data, to obtain the fifth sensing data comprises:
estimating, in at least one of the following manners, the movement status of the object corresponding to the fourth sensing data, to obtain the fifth sensing data:

predicting a movement speed of the object by using a motion model;
predicting displacement of the object based on a V2X data transmission frame rate and packet loss rate;
predicting movement coordinates of the object based on historical coordinate information of the object; and
correcting the movement coordinates of the object based on road information of an environment in which the object is located.

**18.** The apparatus according to any one of claims 14 to 17, wherein obtaining the first sensing result based on the third sensing data and the second sensing data comprises:

determining sixth sensing data from the third sensing data, wherein a first delay associated with the sixth sensing data is less than the second threshold, and the second threshold is less than the first threshold; and
fusing the sixth sensing data and the second sensing data of the first vehicle by using an NMS algorithm, to obtain the first sensing result.

**19.** The apparatus according to any one of claims 15 to 18, wherein the second threshold is negatively correlated with a transmission frequency of the object data.

**20.** The apparatus according to any one of claims 13 to 19, wherein the obtaining unit is specifically configured to:

receive the object data from a server; or
receive the object data from the at least one object terminal.

**21.** The apparatus according to any one of claims 13 to 20, wherein the processing unit is further configured to:
when the first V2X data is not obtained, obtain seventh sensing data based on second V2X data and the V2X data transmission frame rate and packet loss rate, and use the seventh sensing data as the object data, wherein generation time of the second V2X data is earlier than generation time of the first V2X data.

**22.** The apparatus according to any one of claims 13 to 21 wherein that the at least one object terminal is associated with the first vehicle comprises:

the at least one object terminal and the first vehicle are located on a same road; or
the at least one object terminal and the first vehicle are located in a same area.

**23.** The apparatus according to claim 22, wherein the at least one object terminal comprises at least one of the following: a second vehicle or a roadside device.

**24.** The apparatus according to any one of claims 13 to 23, wherein the first sensing data comprises at least one of the following of the object terminal:
a generation timestamp of the first sensing data; and
positioning information, size information, a movement speed, or a movement direction of the at least one object terminal.

**25.** A communication apparatus, comprising at least one processor and an interface circuit, wherein the interface circuit is configured to provide data or code instructions for the at least one processor, and the at least one processor is configured to implement the method according to any one of claims 1 to 12 by using a logic circuit or executing the code instructions.

**26.** An electronic device, comprising a unit configured to implement the method according to any one of claims 1 to 12.

**27.** A computer-readable storage medium, wherein the computer-readable medium stores program code, and when the program code is run on a computer, the computer is enabled to perform the method according to any one of claims 1 to 12.

**28.** A computer program product, wherein when the computer program product runs on a computer, the computer is enabled to perform the method according to any one of claims 1 to 12.

FIG. 1

EP 4 671 050 A1

| Vehicle | | Server/At least one object terminal |
|---|---|---|

S210: Obtain object data  ← V2X data

S220: Obtain a first sensing result based on the object data and second sensing data of a first vehicle, where the first sensing result is used to assist in controlling traveling of the first vehicle

FIG. 2

FIG. 3

Road information → Coordinate correction → Fifth sensing data

Second V2X data

Historical coordinates of an object → Coordinate estimation

Time difference ⟶ Displacement estimation

Motion speed of the object → Motion model

More historical information → Motion model

FIG. 4

Sensing architecture of an ego vehicle

Detection box of an object included in second sensing data → Proposal

Detection box of an object included in fifth sensing data ⟶ Proposal

Proposal → Fusion

Fusion → Sensing result

FIG. 5

Detection box of an
object included in
sixth sensing data

Confidence
optimization

NMS
deduplication

Detection box of an
object included in
second sensing data

Sensing result

FIG. 6

700

Obtaining unit 701 — Processing unit 702

FIG. 7

800

Processor 810

Communication
interface 830

Memory 820

FIG. 8

## INTERNATIONAL SEARCH REPORT

International application No.

**PCT/CN2024/077729**

| A. | CLASSIFICATION OF SUBJECT MATTER |
|---|---|

B60R 16/023(2006.01)i; B60W40/02(2006.01)i; B60W40/12(2012.01)i; B60W40/10(2012.01)i

According to International Patent Classification (IPC) or to both national classification and IPC

| B. | FIELDS SEARCHED |
|---|---|

Minimum documentation searched (classification system followed by classification symbols)

IPC: B60R, B60W

Documentation searched other than minimum documentation to the extent that such documents are included in the fields searched

Electronic data base consulted during the international search (name of data base and, where practicable, search terms used)

CNTXT, VEN, CNKI: 车辆, 感知, 检测, 数据, 控制, 阈值, 时延, 延迟, 时间, vehicle, perception, detect+, data, control+, threshold, delay, time

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110335488 A (SHENZHEN CHENGGU TECHNOLOGY CO., LTD.) 15 October 2019 (2019-10-15) <br> description, paragraphs 36-85, and figures 1-4 | 1, 8, 10-13, 20, 22-28 |
| Y | CN 110335488 A (SHENZHEN CHENGGU TECHNOLOGY CO., LTD.) 15 October 2019 (2019-10-15) <br> description, paragraphs 36-85, and figures 1-4 | 2,14 |
| Y | CN 114173306 A (APOLLO ZHILIAN (BEIJING) TECHNOLOGY CO., LTD.) 11 March 2022 (2022-03-11) <br> description, paragraphs 21-93, and figures 1-6 | 2,14 |
| A | CN 108417087 A (ZHEJIANG GEELY AUTOMOBILE RESEARCH INSTITUTE CO., LTD. et al.) 17 August 2018 (2018-08-17) <br> entire document | 1-28 |
| A | CN 112712717 A (HUAWEI TECHNOLOGIES CO., LTD.) 27 April 2021 (2021-04-27) <br> entire document | 1-28 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **28 March 2024** | **09 May 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

# EP 4 671 050 A1

**INTERNATIONAL SEARCH REPORT**

International application No.

**PCT/CN2024/077729**

## C. DOCUMENTS CONSIDERED TO BE RELEVANT

| Category* | Citation of document, with indication, where appropriate, of the relevant passages | Relevant to claim No. |
|---|---|---|
| A | CN 113911139 A (HUBEI SIENGINE TECHNOLOGY CO., LTD.) 11 January 2022 (2022-01-11) <br> entire document | 1-28 |
| A | CN 115257768 A (QINGLING MOTORS (GROUP) CO., LTD. et al.) 01 November 2022 (2022-11-01) <br> entire document | 1-28 |
| A | CN 115547105 A (ZHIDAO NETWORK TECHNOLOGY (BEIJING) CO., LTD.) 30 December 2022 (2022-12-30) <br> entire document | 1-28 |
| A | US 11107235 B1 (HERE GLOBAL BV) 31 August 2021 (2021-08-31) <br> entire document | 1-28 |

Form PCT/ISA/210 (second sheet) (July 2022)

**INTERNATIONAL SEARCH REPORT**
Information on patent family members

International application No.

**PCT/CN2024/077729**

| Patent document cited in search report | | | Publication date (day/month/year) | Patent family member(s) | | | Publication date (day/month/year) |
|---|---|---|---|---|---|---|---|
| CN | 110335488 | A | 15 October 2019 | None | | | |
| CN | 114173306 | A | 11 March 2022 | None | | | |
| CN | 108417087 | A | 17 August 2018 | US | 2020394918 | A1 | 17 December 2020 |
| | | | | US | 11715377 | B2 | 01 August 2023 |
| | | | | WO | 2019165737 | A1 | 06 September 2019 |
| | | | | EP | 3748603 | A1 | 09 December 2020 |
| | | | | EP | 3748603 | A4 | 31 March 2021 |
| | | | | EP | 3748603 | B1 | 04 May 2022 |
| CN | 112712717 | A | 27 April 2021 | None | | | |
| CN | 113911139 | A | 11 January 2022 | None | | | |
| CN | 115257768 | A | 01 November 2022 | None | | | |
| CN | 115547105 | A | 30 December 2022 | None | | | |
| US | 11107235 | B1 | 31 August 2021 | US | 2021272310 | A1 | 02 September 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310210029